**Europäisches Patentamt**

**European Patent Office**

**Office européen des brevets**

(19)

(11) Veröffentlichungsnummer: **0 223 909**
**B1**

(12) # EUROPÄISCHE PATENTSCHRIFT

(45) Veröffentlichungstag der Patentschrift:
**02.05.90**

(21) Anmeldenummer: **86107888.9**

(22) Anmeldetag: **10.06.86**

(51) Int. Cl.⁴: **B23P 15/32**, B21K 5/04,
B23B 51/06

(54) **Strangpresswerkzeug zur Herstellung eines Hartmetall- oder Keramik-Bohrerrohlings.**

(30) Priorität: **31.10.85 DE 3538758**
**13.01.86 DE 3600681**

(43) Veröffentlichungstag der Anmeldung:
**03.06.87 Patentblatt 87/23**

(45) Bekanntmachung des Hinweises auf die Patenterteilung:
**02.05.90 Patentblatt 90/18**

(84) Benannte Vertragsstaaten:
**AT DE FR GB SE**

(56) Entgegenhaltungen:
**EP-A- 0 118 035**
**DE-C- 441 093**
**GB-A- 924 786**
**US-A- 2 422 994**
**US-A- 3 504 575**
**US-A- 3 950 979**
**US-A- 4 059 031**

(73) Patentinhaber: **Fried. Krupp Gesellschaft mit
beschränkter Haftung, Altendorfer Strasse 103,
D-4300 Essen 1(DE)**

(72) Erfinder: **Lomberg, Alfons, Sattlerweg 15,
D-4250 Bottrop 2(DE)**
Erfinder: **Cleve, Peter, Defreggerstrasse 3,
D-4300 Essen 1(DE)**

(74) Vertreter: **Vomberg, Friedhelm, Dipl.-Phys.,
Graf-Recke-Strasse 231, D-4000 Düsseldorf 1(DE)**

## Beschreibung

Die Anmeldung betrifft ein Strangpreßwerkzeug zur Herstellung eines Hartmetall- oder Keramik-Bohrerrohlings mit mindestens einer innenliegenden Spülbohrung und mindestens einer wendelförmigen Nut oder Rippe aus plastischem Rohmaterial, mit einer Düse, von deren Innenmantel zumindest ein in Preßrichtung verlaufendes Führungselement ausgeht und mit mindestens einem in den Düseninnenraum hineinragenden drahtförmigen Mittelstift, der in Preßrichtung vor dem Düseninnenraum befestigt ist und sich bis zum Ende des Düseninnenraums erstreckt, wobei die Düse derart ausgebildet ist, daß das Rohmaterial wendelförmig verdrillt wird. Ein solches Strangpreßwerkzeug ist beispielsweise aus der US-A 2 422 994 ebenso bekannt wie Hartmetall- bzw. Sinterbohrrohlinge und Strangpreßverfahren aus der EP-A1 0 118 035.

Aus den durch die in der genannten europäischen Patentanmeldung beschriebene wendelförmige Verdrillung hergestellten Rohlingen müssen noch die Spankammern ausgeschliffen werden, wodurch nicht unerhebliche Kosten entstehen. Zur Herstellung der Hartmetall-Bohrerspitze wird a.a.O., Seite 10, vorgeschlagen, einen kreiszylinderförmigen Sintermetallrohling mittels einer Strangpreßeinrichtung, in der eine Preß-Formdüse angeordnet ist, zu extrudieren.

Die wendelförmig verlaufenden Kühlkanäle sollen durch Verdrillen des aus der Strangpreßeinrichtung austretenden Sintermetallrohlings mit einer auf den Materialfluß, auf die angestrebte Bohrergeometrie und auf den Wendelverlauf der Kühlkanäle abgestimmte Winkelgeschwindigkeit hergestellt werden, wobei die (offenbar nach dem Stand der Technik bekannten) Verdrilleinrichtungen eine stetig und gleichmäßige axiale Führung des Sintermetallrohlings und eine ebenfalls kontinuierliche und stetige Verdrillbewegung besorgen.

Nachteiligerweise sind demnach neben dem Strangpreßwerkzeug zusätzliche Verdrilleinrichtungen sowie entsprechende Steuer- und Regel-Organe erforderlich.

Auch das in der US-A 2 422 994 beschriebene Verfahren arbeitet mehrstufig. Das plastische Rohmaterial wird zunächst durch Strangpressen in einen Bohrerrohling mit zumindest einer geradlinig verlaufenden, außenliegenden Nut umgewandelt. Danach wird der so gestaltete Rohling durch eine Relativ-Drehbewegung zwischen der Strangpreßdüse und dem Rohmaterial verdrillt, wozu beispielsweise die Düse drehbar ausgebildet sein soll, während der Bohrerrohling lediglich in Strangpreßrichtung bewegbar gehalten wird.

Die US-A 4 059 031 beschreibt die Herstellung eines Bohrerrohlings mit innenliegenden Kühlkanälen im Rahmen eines Schmiede- oder Extrusionsvorganges. Hierzu wird ein ortsfester Dorn benötigt, an dem entlang das zu verarbeitende Rohmaterial in Rohrform der weiteren Verformung - entweder durch Walzen oder mittels eines Preßringes - zugeführt wird. Auch bei Benutzung des Preßrings muß das den Preßring verlassende Erzeugnis zusätzlich, d.h. in einer weiteren Bearbeitungsstufe verdrillt werden.

Es ist Aufgabe der vorliegenden Erfindung, ein Strangpreßwerkzeug anzugeben, das es ermöglicht, mit möglichst geringem Aufwand, d.h. unter Einsparung zusätzlicher Arbeitsgänge sowie unter Einsparung von Verdrill-, Steuer- und Regeleinrichtungen, einen Hartmetall- oder Keramik-Bohrerrohling herzustellen, der die gewünschte Anzahl innenliegender Spülbohrungen aufweist.

Die Aufgabe wird durch das in den Ansprüchen 1 bis 12 beschriebene Strangpreßwerkzeug gelöst.

Statt den Sinterrohling erst nach dem Austritt aus der Strangpreßeinrichtung wie bisher vorgeschlagen zu verdrillen, werden die Verdrillung und die Herstellung der Spülbohrungen in einem Verfahrensgang mit dem Strangpressen gewährleistet. Die am Dorn des Strangpreßwerkzeuges vorgesehenen elastischen Mittelstifte schaffen schon während des Verdrillens ihrem Durchmesser entsprechende Spülbohrungen, deren gleichmäßige Geometrie nicht durch spätere Arbeitsgänge wieder zerstört wird. Da gleichzeitig mit dem Strangpressen über die Führungsrippe bzw. die -rippen oder die Führungsnut bzw. -nuten die Verdrillung bewirkt wird, hängt diese auch nicht mehr von äußeren Größen wie der Materialflußgeschwindigkeit in der Strangpresse ab. Unabhängig davon, mit welcher Geschwindigkeit die Stempel das Material in und durch die Düse preßt, wird stets eine gleichmäßige Steigung des Hartmetall- oder Keramikbohrerrohlings bewirkt. Das Steigungsmaß der Nuten oder Rippen des Rohlings bestimmt vorzugsweise die Steigung der Spankammer und kann von Bohrertyp zu Bohrertyp verschieden sein. Um mit demselben Strangpreßwerkzeug arbeiten zu können, muß zur Herstellung von Rohlingen mit einer anderen Rippen- bzw. Nutensteigung oder einem anderen Durchmesser lediglich die Düse gewechselt werden. Auch hier ist ansonsten keine andere Einstellung oder Regelung vonnöten. Die Gleichmäßigkeit der Steigung wird erhöht, wenn die Führung über die besagte Rippenwendel über mindestens 90°, vorzugsweise über mindestens 180°, erfolgt. Aus apparate-, fertigungs- und verfahrenstechnischen Gründen wird eine Führung, das ist die Rippe oder Nut, bevorzugt, die im Querschnitt halbkreisförmig ist und deren Radius mindestens 0, 2 mm beträgt.

Erfahrungen haben gezeigt, daß der Spiralwinkel der wendelförmigen Rippe bzw. die Nut in der Düse etwas größer gewählt werden sollte als der beim Rohling gewünschte Winkel. In der Regel beträgt das Aufmaß ca. 3° bis 7°.

Werden die Mittelstifte bis in Höhe des Düseneintrittsraumes durch Abstandshalter gestützt, so erhöht sich vorteilhafterweise das Gleichmaß des parallelen Verlaufs zueinander bzw. zur umlaufenden Nut oder zur umlaufenden Rippe.

Der Mittelstift soll elastisch sein, damit er seine zwangsweise Verwindung beim Verdrillen des Hartmetall- oder Keramikpreßgutes ohne Bruch übersteht, bevorzugt wird z.B. Cu- oder eine Buntmetall-Legierung, Fe und/oder eine Fe-Legierung und/oder ein Leichtmetall aus Al oder einer Leichtmetall-Legierung und/oder ein Kunststoff, wie insbesondere Polyamid, verwendet. Besteht der Mittelstift bzw. bestehen die Mittelstifte aus Metall, so empfiehlt sich nach einer Weiterbildung der Erfindung eine Polyamid-Beschichtung als Überzug.

Je nach Verwendungszweck des Bohrers, der schließlich aus dem Rohling hergestellt werden soll, kann es sinnvoll sein, Spülbohrungen mit verschiedenen Durchmessern vorzusehen. In einem solchen Fall ist ein Dorn mit entsprechend dimensionierten Mittelstiften zu verwenden.

Im Hinblick auf eine gute Fließfähigkeit des Preßgutes ist der Dorn bevorzugt an der der Düse zugewandten Seite im wesentlichen kegelförmig verjüngt, so daß die elastischen Mittelstifte am Kegelmantel austreten. Die Kegelform kann in einer Spitze enden oder in einen im wesentlichen zylinderförmigen Abstandshalter zur Abstützung der Mittelstifte übergehen.

Das erfindungsgemäße Strangpreßwerkzeug weist eine (wechselbare) Düse mit mindestens einer in Preßrichtung wendelförmig verlaufenden Rippe oder einer Nut und einen vor dem Düseninnenraum endenden Dorn auf, an dem ein oder mehrere elastische Mittelstifte mit dem gewünschten Spülbohrungsdurchmesser befestigt sind. Die Mittelstifte sind an der der Düse zugewandten Seite des Dorns in dem gewünschten Abstand befestigt, den die hiermit herstellbaren Spülbohrungen haben, und ragen in den Düseninnenraum. Vorzugsweise ragen sie bis an das Düseninnenraumende und sogar 1 mm bis 2 mm darüber hinaus. Es können Nuten- oder Rippenwendeln verwendet werden, die in der Projektion mehr als 90°, vorzugsweise mehr als 180°, beschreiben. Vorteilhafterweise ist das Strangpreßwerkzeug wie die bisher bekannten Werkzeuge ebenso einfach gebaut, erspart aber ansonsten zum Strangpreßwerkzeug erforderliche (zusätzliche) Verdrillungseinrichtungen. Aus fertigungstechnischen Gründen empfiehlt sich die in Anspruch 2 beschriebene Nut- oder Rippengeometrie.

Ausführungsbeispiele der Erfindung sind in den Zeichnungen dargestellt. Es zeigen:

Fig. 1a, b einen Bohrerrohling mit eingearbeiteter Nut und Spülbohrungen in verschiedenen Schnittansichten,

Fig. 1c einen Bohrerrohling in Querschnittsansicht,

Fig. 2 ein Strangpreßwerkzeug in einer Querschnittsansicht,

Fig. 3 eine Schnittansicht durch einen kegeligen Dorn,

Fig. 4 eine entsprechende Ansicht eines Dorns mit zylinderförmigem Abstandshalter,

Fig. 5 eine Düse in zwei Schnittansichten mit einer wendelförmigen Rippe,

Fig. 6 eine der Düse vorschaltbare Einlaufdüse,

Fig. 7a, b einen Bohrerrohling mit eingearbeiteter Rippe und Spülbohrungen in verschiedenen Ansichten und

Fig. 8a, b eine Düse mit einer wendelförmigen Nut in zwei verschiedenen Ansichten.

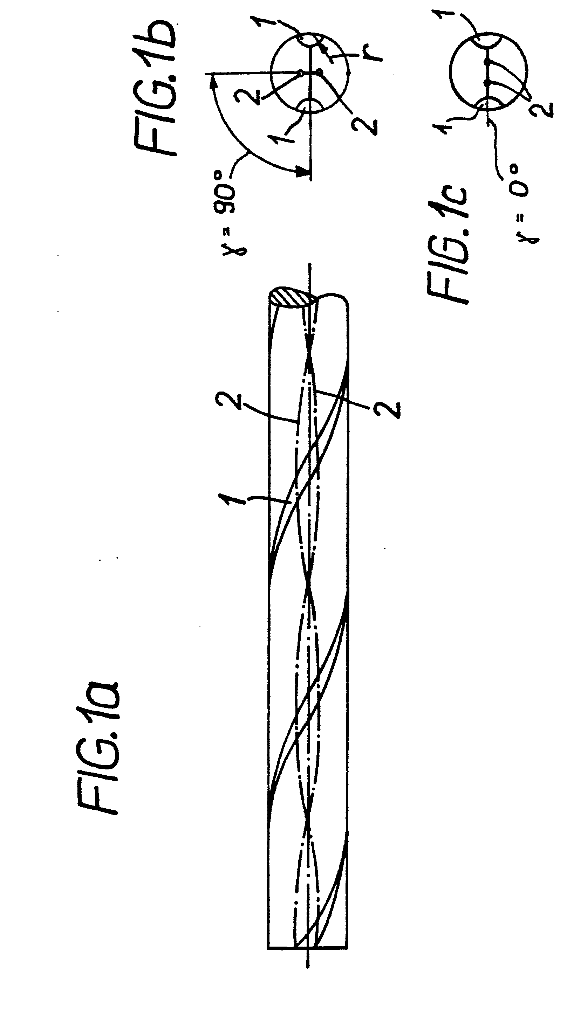

Der in Fig. 1a, b dargestellte Hartmetallbohrerrohling besitzt zwei wendelförmig umlaufende Nuten 1 mit halbkreisförmiger Wand, wobei der Radius r 1 mm beträgt. Die Nuten sind "vorgeformte" Spankammern, die später zur Herstellung der Bohrerspitze vollständig ausgeschliffen werden. Zudem besitzt der Hartmetallbohrerrohling zwei Spülbohrungen 2, hier eines Durchmessers von 0,8 mm, die parallel zu den Nuten 1 verlaufen. Die Verbindungslinien der Nuten 1 sowie die der Spülbohrungen 2 bilden einen Winkel von 90°, wohingegen in Fig. 1c eine Ausbildung mit einem Winkel von $\tau = 0°$ dargestellt ist. Dazwischen ist jedes Winkelmaß ebenso möglich wie eine exzentrische Anordnung, bei der beide Spülbohrungen jenseits einer gedachten Querschnittsmittellinie liegen.

Von diesem Bohrerrohling wird zur Herstellung der Bohrerspitze ein entsprechend langes Stück abgeschnitten, die Spankammern (Schneidlippen) eingeschliffen und die Bohrerspitze angeschliffen, wo die beiden Spülbohrungen enden.

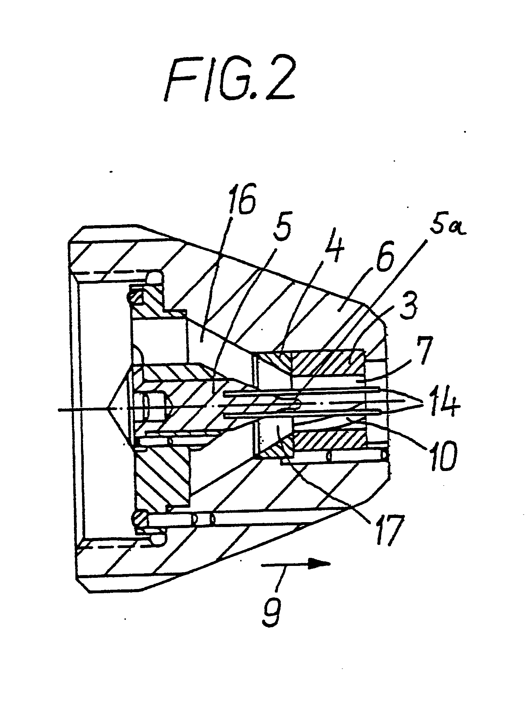

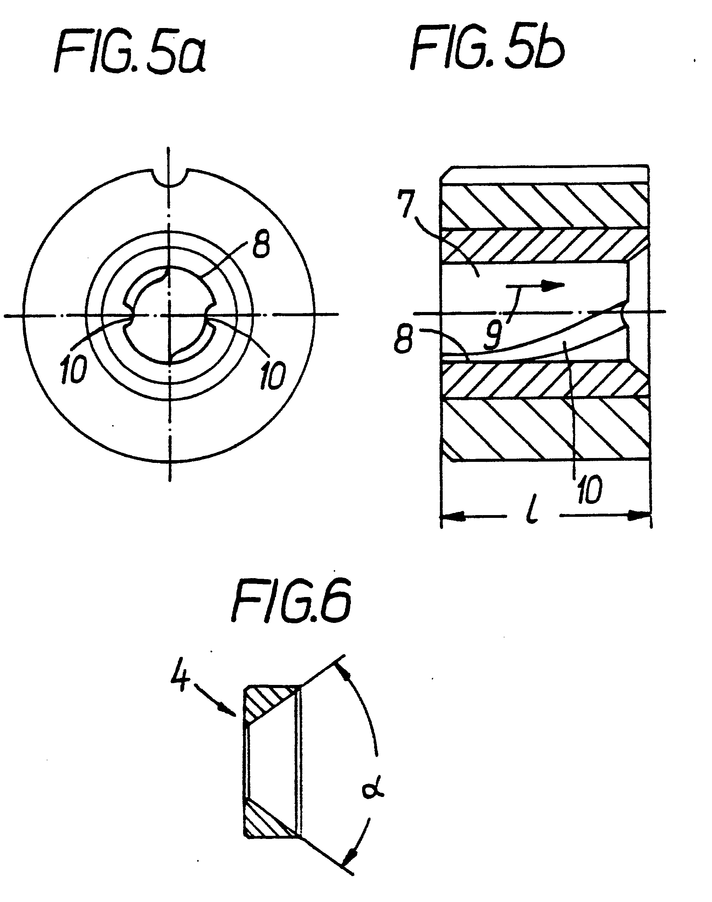

Fig. 2 zeigt das erfindungsgemäße Strangpreßwerkzeug, das im wesentlichen aus einer Düse 3, einer dieser vorgeschalteten Einlaufdüse 4, einem Dorn 5 sowie der Düsenfassung 6 besteht. Die Düse 3 ist in Fig. 5a, b und die Einlaufdüse 4 in Fig. 6 einzeln dargestellt. Die Düse 3 besteht aus einem zylinderförmigen Ring mit einem zylindrischen Düseninnenraum 7, der durch die Innenmantelfläche 8 begrenzt wird. Diese Düsenmantelinnenfläche 8 weist zwei in Preßrichtung 9 wendelförmig verlaufende Rippen 10 auf, die über die Düsenlänge 1 einen Viertelkreis (90°) beschreiben. Die im Querschnitt halbkreisförmigen Rippen haben einen Radius von mindestens 1 mm. Der in Fig. 5a, b dargestellten Düse 3 ist die in Fig. 6 skizzierte Einlaufdüse 4 vorgeschaltet. Die Einlaufdüse hat einen konischen Einlauftrichter für das Preßgut, dessen kleinster Radius etwa dem Radius der Einlaufdüse entspricht. Der Öffnungswinkel $\alpha$ des Einlauftrichters beträgt etwa 70°.

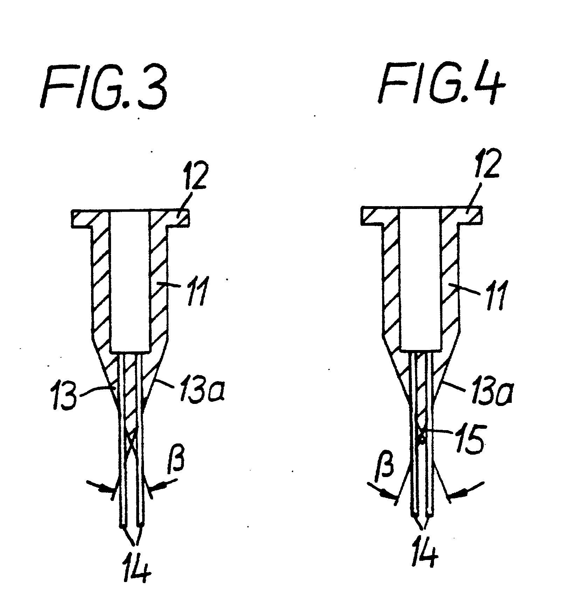

Axial zentriert zu der Einlaufdüse 4 und der Düse 3 ist der Dorn 5 angeordnet, dessen Spitze 5a etwa kurz vor dem Düseninnenraum 7 liegt. Der Dorn 5 hat z.B. die in Fig. 3 und 4 dargestellte Form. Neben einem Zylinder 11 und einem Sockel 12 weist der Dorn entweder einen Kegel 13 auf, wobei die Mittelstifte 14 aus der Kegelmantelfläche 13a parallel zur Preßrichtung austreten, oder die Dornspitze 5a läuft in einem zylinderförmigen Abstandshalter 15 aus, der so angeordnet ist, daß die parallel aus der Kegel(stumpf-)mantelfläche 13a austretenden Mittelstifte 14 an ihm anliegen. Ein bevorzugter Kegelmantelwinkel $\beta$ liegt bei 40°.

Die genannten Teile sind in nach dem Stand der Technik bekannter Weise in einer Düsenfassung 6 untergebracht.

Der Bohrrohling wird in einem einzigen Verfahrensschritt wie folgt hergestellt:

Ein Hartmetallblock wird von einem in Fig. 2 nicht dargestellten Stempel in Richtung des Pfeils 9 in den zwischen Dorn 5 und Düsenfassung 6 gebildeten Raum 16 und infolge der weiteren Stempelbewegung in den Raum 17 der Einlaufdüse 4 gepreßt, wo das Hartmetall verdichtet wird. Die eigentliche Formgebung vollzieht sich in dem Düseninnenraum 7 auf zweierlei Weise. Beim weiteren Vorschub des Stempels erhält das Hartmetall seine zylindrische Form mit der Maßgabe, daß die Rippen 10 umfangsseitig eine wendelförmig verlaufende Nut im Hartmetallstrang erzeugen und damit gleichzeitig bewirken, daß der aus der Düse 5 gepreßte Strang in eine Rotation um seine Längsmittelachse versetzt wird. Diese Rotation hat zur Folge, daß die den Düseninnenraum 7 durchragenden Mittelstifte nicht - wie bei einem rotationsfreien Strang - zylinderförmige Löcher entsprechend dem Drahtdurchmesser hinterlassen, sondern daß die elastischen Mittelstifte 14 ebenfalls wendelförmig verdrillt werden und dementsprechend jeweils eine wendelförmig verlaufende Spülbohrung 2 erzeugen, die parallel zu den Nuten 1 verläuft. Der Abstand der Mittelstifte 14 voneinander gibt entsprechend den Abstand der parallel zueinander laufenden Spülbohrungen vor.

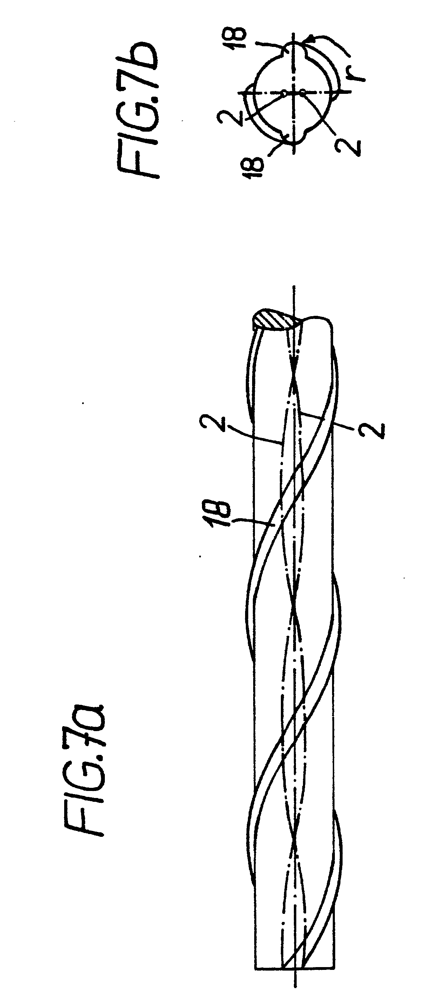

Der in Fig. 7a dargestellte Hartmetallbohrerrohling besitzt zwei wendelförmig umlaufende Rippen 18 mit im Querschnitt halbkreisförmiger Wand, wobei der Radius r 1 mm beträgt. Im übrigen entspricht der Hartmetallbohrerrohling dem in Fig. 1a, b dargestellten und oben beschriebenen.

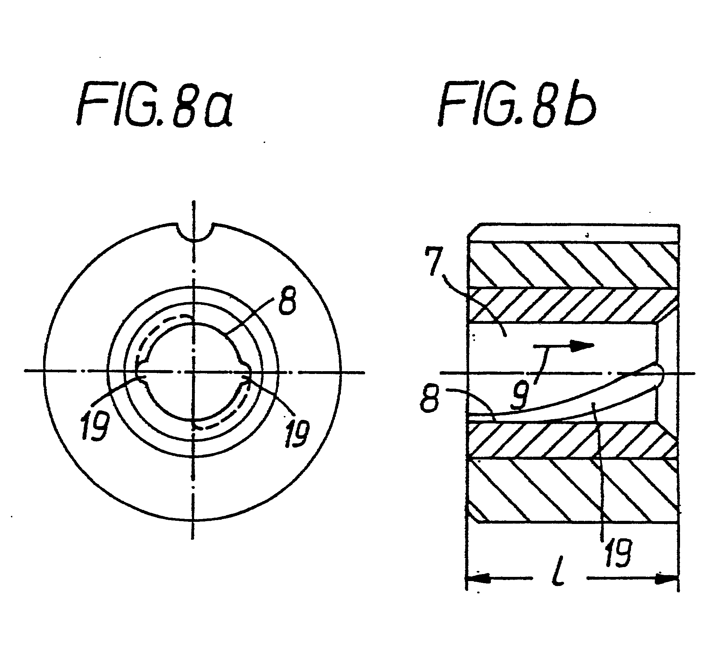

Fig. 8a und 8b zeigen eine Düse, die im Unterschied zu der in Fig. 5a, b dargestellten und oben beschriebenen Düse eine Düsenmantelinnenfläche 8 mit zwei in Preßrichtung 9 wendelförmig verlaufende Nuten 19 aufweist, die über die Düsenlänge 1 einen Viertelkreis (90°) beschreiben.

## Patentansprüche

1. Strangpreßwerkzeug zur Herstellung eines Hartmetall- oder Keramik-Bohrerrohlings mit mindestens einer innenliegenden Spülbohrung (2) und mindestens einer wendelförmigen Nut (1) oder Rippe (18) aus plastischem Rohmaterial, mit einer Düse (3), von deren Innenmantel (8) zumindest ein in Preßrichtung verlaufendes Führungselement (10 bzw. 19) ausgeht und mit mindestens einem in den Düseninnenraum (7) hineinragenden drahtförmigen Mittelstift (14), der in Preßrichtung vor dem Düseninnenraum (7) befestigt ist und sich bis zum Ende des Düseninnenraums (7) erstreckt, wobei die Düse (3) derart ausgebildet ist, daß das Rohmaterial wendelförmig verdrillt wird, dadurch gekennzeichnet, daß jedes als Rippe (10) oder Nut (19) ausgebildete Führungselement wendelförmig verläuft und jeder Mittelstift (14) an einem vor dem Düseninnenraum (7) endenden Dorn (5) gehalten und derart elastisch ausgebildet ist, daß er sich der Verdrillung des Rohmaterials im Düseninnenraum (7) unter Bildung einer Wendel anpaßt.

2. Strangpreßwerkzeug nach Anspruch 1, gekennzeichnet durch eine Düsenlänge, bei der jede Rippe (10) oder Nut (19) eine sich über einen Winkelbereich von mehr als 90°, vorzugsweise von mehr als 180°, erstreckende Wendel bildet.

3. Strangpreßwerkzeug nach Anspruch 1 oder 2, dadurch gekennzeichnet, daß jede Rippe (10) oder Nut (19) im Querschnitt halbkreisförmig mit einem Radius (r) von mindestens 0,2 mm ausgebildet ist.

4. Strangpreßwerkzeug nach einem der Ansprüche 1 bis 3, dadurch gekennzeichnet, daß jeder Mittelstift (14) sich mindestens bis zum Ende des Düseninnenraums (7) erstreckt.

5. Strangpreßwerkzeug, mit mehreren Mittelstiften (14), nach einem der Ansprüche 1 bis 4, dadurch gekennzeichnet, daß die Mittelstifte (14) unterschiedliche Durchmesser aufweisen.

6. Strangpreßwerkzeug nach einem der Ansprüche 1 bis 5, dadurch gekennzeichnet, daß der Dorn (5) an der der Düse (3) zugewandten Seite im wesentlichen kegelförmig verjüngt ist und jeder Mittelstift (14) aus der Kegelmantelfläche (13) austritt.

7. Strangpreßwerkzeug nach Anspruch 6, dadurch gekennzeichnet, daß die kegelförmige Verjüngung in einen im wesentlichen zylinderförmigen Abstandshalter (15) zur Abstützung jedes Mittelstiftes (14) übergeht.

8. Strangpreßwerkzeug nach einem der Ansprüche 1 bis 7, dadurch gekennzeichnet, daß jeder Mittelstift (14) aus Kupfer oder einer Buntmetallegierung, insbesondere Kupferlegierung, besteht.

9. Strangpreßwerkzeug nach einem der Ansprüche 1 bis 7, dadurch gekennzeichnet, daß jeder Mittelstift (14) aus Eisen oder einer Eisenlegierung besteht.

10. Strangpreßwerkzeug nach einem der Ansprüche 1 bis 7, dadurch gekennzeichnet, daß jeder Mittelstift (14) aus einem Leichtmetall oder einer Leichtmetallegierung besteht.

11. Strangpreßwerkzeug nach einem der Ansprüche 1 bis 7, dadurch gekennzeichnet, daß jeder Mittelstift (14) aus Kunststoff, insbesondere Polyamid, besteht.

12. Strangpreßwerkzeug nach einem der Ansprüche 8 bis 10, dadurch gekennzeichnet, daß jeder metallische Mittelstift (14) mit Polyamid beschichtet ist.

## Claims

1. A continuous pressing tool for the production of a drill blank of hard metal or ceramics, having: at least one internal flushing bore (2); at least one helical groove (1) or rib (18) of plastic raw material; a nozzle (3), from whose internal generated surface (8) there extends at least one guide element (10; 19) extending in the pressing direction; and at least one wire-formed central pin (14) which extends into the inside (7) of the nozzle and which is attached upstream of the inside (7) of the nozzle in the pressing direction and extends as far as the end of the inside (7) of the nozzle, the nozzle (3) being so constructed that the raw material is helically twisted, characterized in that each guide element taking the form of a rib (10) or a groove (19) extends helically, and each central pin (14) is retained on a mandrel (5) terminating upstream of the inside (7) of the nozzle and is constructed resiliently, so that it adapts itself to the twisting of the raw material in the inside (7) of the nozzle, while forming a helix.

2. A continuous pressing tool according to claim 1, characterized by a nozzle length in which each rib (10) or groove (19) forms a helix extending over an angular range of more than 90°, preferably more than 180°.

3. A continuous pressing tool according to claims 1 or 2, characterized in that each rib (10) or groove (19) is constructed semicircular in cross-section with a minimum radius (r) of 0.2 mm.

4. A continuous pressing tool according to one of claims 1 to 3, characterized in that each central pin (14) extends at least as far as the end of the inside (7) of the nozzle.

5. A continuous pressing tool having a number of central pins (14), according to one of claims 1 to 4, characterized in that the central pins (14) have different diameters.

6. A continuous pressing tool according to one of claims 1 to 5, characterized in that on the side adjacent the nozzle (3) the mandrel (5) tapers substantially conically, and each central pin (14) emerges from the generated surface (13) of the cone.

7. A continuous pressing tool according to claim 6, characterized in that the conical tapering merges into a substantially cylindrical spacer (15) for supporting each central pin (14).

8. A continuous pressing tool according to one of claims 1 to 7, characterized in that each central pin (14) is made of copper or a non-ferrous metal alloy, more particularly a copper alloy.

9. A continuous pressing tool according to one of claims 1 to 7, characterized in that each central pin (14) is made of iron or an iron alloy.

10. A continuous pressing tool according to one of claims 1 to 7, characterized in that each central pin (14) is made of a light metal or a light metal alloy.

11. A continuous pressing tool according to one of claims 1 to 7, characterized in that each central pin (14) is made of plastics, more particularly polyamide.

12. A continuous pressing tool according to one of claims 1 to 8, characterized in that each metal central pin (14) is coated with polyamide.

## Revendications

1. Outil de presse à extruder, pour la fabrication d'une ébauche de foret en métal dur ou en céramique, avec au moins un alésage (2) interne pour l'arrosage et au moins une rainure (1) ou une nervure (18) hélicoïdale, en matière première plastique, comportant une filière (3), de la surface interne de laquelle sort un organe de guidage (10 ou 19), s'étendant dans la direction d'extrusion et comportant au moins une broche centrale (14) filiforme, pénétrant dans l'espace intérieur (7) de la filière, qui est fixée en avant de l'espace intérieur (7) de la filière suivant la direction d'extrusion, et qui s'étend jusqu'à l'extrémité de l'espace intérieur (7) de la filière, la filière (3) étant réalisée de telle façon que la matière première soit torsadée en forme d'hélice, caractérisé en ce que chaque organe de guidage, sous la forme d'une nervure (10) ou d'une rainure (19), suit un tracé de forme hélicoïdale et en ce que chaque broche centrale (14) est maintenue sur un mandrin (5) se terminant avant l'espace intérieur (7) de la filière et est réalisée élastique, de façon à s'adapter à la torsion de la matière première dans l'espace intérieur de la filière, en formant une hélice.

2. Outil de presse à extruder suivant la revendication 1, caractérisé par une longueur de filière pour laquelle chaque nervure (10) ou rainure (19) forme une hélice s'étendant sur une zone angulaire de plus de 90°, et de préférence de plus de 180°.

3. Outil de presse à extruder suivant la revendication 1 ou la revendication 2, caractérisé en ce que chaque nervure (10) ou rainure (19) est réalisée avec une section en forme de demi-cercle, comportant un rayon (r) d'au moins 0,2 mm.

4. Outil de presse à extruder suivant l'une quelconque des revendications 1 à 3, caractérisé en ce que chaque broche centrale (14) s'étend au moins jusqu'à l'extrémité de l'espace intérieur (7) de la filière.

5. Outil de presse à extruder comportant plusieurs broches centrales (14), suivant l'une quelconque des revendications 1 à 4, caractérisé en ce que les broches centrales (14) présentent des diamètres différents.

6. Outil de presse à extruder suivant l'une quelconque des revendications 1 à 5, caractérisé en ce que le mandrin (5) s'amincit en formant essentiellement un cône, du côté tourné vers la filière (3) et en ce que chaque broche centrale (14) dépasse de la surface extérieure (13) du cône.

7. Outil de presse à extruder suivant la revendication 6, caractérisé en ce que l'amincissement conique débouche dans un écarteur (15) de forme essentiellement cylindrique pour assurer l'appui de chaque broche centrale (14).

8. Outil de presse à extruder suivant l'une quelconque des revendications 1 à 7, caractérisé en ce que chaque broche centrale (14) est constituée de cuivre ou d'un alliage de métaux lourds non ferreux, en particulier d'un alliage de cuivre.

9. Outil de presse à extruder suivant l'une quelconque des revendications 1 à 7, caractérisé en ce que chaque broche centrale (14) est constituée de fer ou d'un alliage ferreux.

10. Outil de presse à extruder suivant l'une quelconque des revendications 1 à 7, caractérisé en ce que chaque broche centrale (14) est constituée de métal léger ou d'un alliage de métal léger.

11. Outil de presse à extruder suivant l'une quelconque des revendications 1 à 7, caractérisé en ce que chaque broche centrale (14) est constituée de matière plastique, en particulier de polyamide.

12. Outil de presse à extruder suivant l'une quelconque des revendications 8 à 10, caractérisé en ce que chaque broche centrale (14) métallique est recouverte d'une couche de polyamide.

FIG.1a

FIG.1b

1    2

$\gamma = 90°$

2
1        1
2

2

r

2

FIG.1c    1    1

$\gamma = 0°$

2

EP 0 223 909 B1

# FIG.2

FIG.3

FIG.4

# FIG.5a

# FIG.5b

8

10        10

7

8        9

10

$\ell$

# FIG.6

4

$\alpha$

FIG.7b

FIG.7a

# FIG.8a

# FIG.8b